(19) **Europäisches Patentamt**

**European Patent Office**

**Office européen des brevets**

(11) **EP 0 712 240 B1**

(12) **EUROPEAN PATENT SPECIFICATION**

(45) Date of publication and mention
of the grant of the patent:
**09.08.2000 Bulletin 2000/32**

(51) Int. Cl.⁷: **H04N 5/232**, H04N 7/18, G01S 5/04

(21) Application number: **94916413.1**

(22) Date of filing: **30.05.1994**

(86) International application number:
**PCT/JP94/00857**

(87) International publication number:
**WO 95/33334 (07.12.1995 Gazette 1995/52)**

(54) **IMAGING METHOD AND ITS APPARATUS**

BILDERZEUGUNGSVERFAHREN UND DAZUGEHÖRIGES GERÄT

PROCEDE D'IMAGERIE ET SON APPAREIL

(84) Designated Contracting States:
**DE FR GB**

(43) Date of publication of application:
**15.05.1996 Bulletin 1996/20**

(73) Proprietor: **HYUGA, Makoto**
**Higashimurayama-shi, Tokyo 189 (JP)**

(72) Inventor: **HYUGA, Makoto**
**Higashimurayama-shi, Tokyo 189 (JP)**

(74) Representative:
**BATCHELLOR, KIRK & CO.**
**2 Pear Tree Court**
**Farringdon Road**
**London EC1R 0DS (GB)**

(56) References cited:
**WO-A-92/04641**      **DE-A- 4 220 316**
**GB-A- 2 258 579**      **JP-A- 1 048 575**
**JP-A- 1 158 374**      **JP-A- 4 307 383**
**JP-A- 63 166 384**      **JP-U- 2 082 174**
**US-A- 5 210 604**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

TECHNICAL FIELD

This invention relates to a method and an apparatus for taking pictures of a specific subject.

BACKGROUND ART

Nowadays, taking pictures of a player on a golf course or the like is usually done by a professional or amateur photographer taking a strip comprising approximately 10 frames at the starting bole or another member shooting a video of the player.

When taking pictures of a player, however, it is difficult for a nonaffiliated person to come into the course in view of the safety of players and the photographer himself and because of other reasons. On the other hand, having another player take pictures tends to disturb his concentration on the game.

Furthermore, in many cases pictures of a mere 10 frames or so taken at a starting hole are insufficient to be used for studying the player's swing and so on and serve no more than as souvenir pictures.

In addition, as the player often wants to study his swing throughout the game, taking pictures only at a starting hole is not wholly satisfactory, showing how good or bad his swings arc only for at the starting hole.

Examples of conventional picture-taking apparatuses include one disclosed in Japanese Patent Laying -open No. 191133/1988 which calls for taking pictures of a subject by means of transmitting signals from a transmitting means attached to the subject and receiving these signals using a receiving means, another disclosed in Japanese Utility Model Laying - open No. 117625/1989 which calls for taking pictures of a subject by means of receiving signals transmitted from a transmitting means attached to the subject and causing a picture-taking device to follow the direction of the strongest signal, and another disclosed in Japanese Patent Laying-open No. 134351/1981 which calls for following a subject by means of a transmitting means attached to the subject and shooting for a specified period of time.

However, the configuration according to Japanese Patent Laying-open No. 191133/1988 and Japanese Utility Model Laying-open No. 117625/1989 merely call for causing a picture-taking device to follow a subject to take pictures thereof, and the configuration according to Japanese Patent Laying-open No. 134351/1989, too, is to take pictures of a subject for a specified period of time by means of simply orienting a picture-taking device in such a direction as to follow the subject. In other words, all of these configurations are capable only of taking pictures of a subject without consideration of the distance to the subject. Therefore, pictures are always taken under the same conditions, regardless of the distance between the subject and the picture-taking device, and often come out with unsatisfactory results, such as, for example, the subject is too small for the size of a frame or too large to fit completely in a frame.

In order to solve the above problems, a subject of the invention is to provide a picture-taking method and apparatus which is capable of reliably taking visual images of a subject while the subject is moving, ensuring an image of the subject within a frame maintains a nearly constant proportion in size.

DISCLOSURE OF INVENTION

Accordingly the present invention provides a method of taking pictures of a subject comprising the steps of:

detecting at the subject, the location of the subject;
transmitting from the subject (1), a signal which includes the location data, and subject identification data
receiving and extracting said signal from the subject and orienting a picture-taking device (14) in the direction of said location data,
determining the distance between said picture-taking device (14) and the subject (1) from said location data in order to determine the degree of zooming and focussing so as to adjust the angle of view and bring the subject into focus,
taking pictures of the subject (1) with said picture-taking device (14) and recording the obtained pictures, said picture-taking procedure continuing for a specified length of time after receiving said signals.

According to another feature thereof, the invention handles a plurality of subjects whose pictures are being taken, each of which has its own ID; signals to be transmitted include ID data corresponding to respective subjects; and shooting is performed with the ID data being specified. Therefore, according to the invention, it is easy to judge which subject corresponds to a given pictures.

According to yet another feature of the invention, pictures are classified and separately recorded depending on their ID data. Therefore, it is possible to separately record respective images of different subjects.

According to yet another feature of the invention, ID data is added to each picture, and images which are thus provided with respective ID data are continuously recorded in the order in which they are shot and then edited with respect to each ID data. Therefore, it is possible to edit pictures according to respective subjects with a minimal number of picture recording means.

According to yet another feature of the invention, a plurality of picture-taking devices are provided, and the most suitable device is chosen from among these picture-taking devices based on signals from a subject whose picture is being taken. with the configuration as above, the invention is effective in taking pictures of a subject with the most appropriate picture-taking device.

According to yet another feature of the invention, signals from a subject are received by a plurality of receivers, data for the location of the subject from which the signals have been sent is extracted based on said signals, and the distance between the subject and the picture-taking device is computed from the location extracted as above. With the configuration as above, the invention is effective in judging the location of a subject easily and taking pictures of the subject under the most appropriate conditions.

The invention also extends to aparatus for taking pictures of subjects in different locations, comprising:

location detecting means for each subject,
means ($1_{101}$ - $1_{999}$)for transmitting signals from the subject, including location data and subject identification data (ID)
signal receiving means (11);
means (12) for extracting identification data from the received signal;
means (13) for extracting the location data from the received signal,
controller means (17) for zooming and focussing a picture-taking device (14) to bring the subject into focus at a required image size in accordance with the location data;
and means (18-20) for recording pictures taken by said picture-taking device.

Further, according to yet another feature of the invention, the invention is provided with one or more transmitting means which are respectively in the possession of subjects whose pictures are being taken and transmit signals; a signal receiving means to receive signals from the transmitting means; an extracting component to extract the location of the transmitting means based on the signals received by the receiving means; a picture-taking device for taking pictures of the subject, the picture-taking device being capable of zooming and bringing the subject into focus according to the distance thereto; a picture-taking device controller component to adjust the direction and angle of view of the picture-taking device based on the location extracted by the extracting component; and a picture recording means to record pictures taken by the picture-taking device. With the configuration as above, the invention is capable of receiving signals from a subject whose picture is being taken by means of the receiving means, adjusting the direction and the angle of view in the direction of the subject by means of the picture-taking device controller component, thereby bringing the subject into focus and taking pictures of same.

According to yet another feature of the invention, transmitting means have their own respective IDs, data for which is included in signals transmitted by the corresponding transmitting means, and the receiving means is provided with an ID discriminating means to determine the identification of the transmitting means based on the ID data included in the received signals. With the configuration as above, judgement can be easily made as to which transmitting means the subject whose picture has been taken corresponds to.

According to yet another feature thereof, the invention is provided with a plurality of picture recording means as well as a selecting means to select picture recording means according to respective ID data. With the configuration as above, it is possible to separately record respective images of different subjects.

According to yet another feature of the invention, the picture recording means adds ID data to each picture image when recording same, and an editing means which edits picture images having ID data attached as above with respect to each ID data is provided. With the configuration as above, the invention is capable of separating picture images according to respective subjects with a minimal number of picture recording means.

According to yet another feature thereof, the invention is provided with a plurality of picture-taking devices and a picture-taking device selecting means to choose at least one picture-taking device from among these picture-taking devices. With the configuration as above, the invention is effective in taking pictures of a subject with the most suitable picture-taking device selected by the picture-taking device selecting means.

According to yet another feature thereof, the invention is provided with a plurality of signal receiving means, a location extracting means to extract data for the location of the subject from which the signals have been sent according to signals received by said signal receiving means, and a computing means to compute the distance between the subject and the picture-taking device based on the location extracted as above. With the configuration as above, the invention is capable of determining the exact location of a subject according to, for example, the principle of triangulation using a plurality of signal receiving means, thereby taking pictures of the subject under the most appropriate conditions.

According to yet another feature of the invention, a location detection means to detect the respective locations of transmitting means is provided, signals transmitted by each transmitting means include locational data, and the computing means computes the distance and direction from the picture-taking device to said transmitting means based on the locational data received as above. With the configuration as above, the part of the system occupied by the signal receiving means is able to easily determine the location of a subject whose picture is being taken without having to be provided with a location detection means.

BRIEF DESCRIPTION OF DRAWINGS

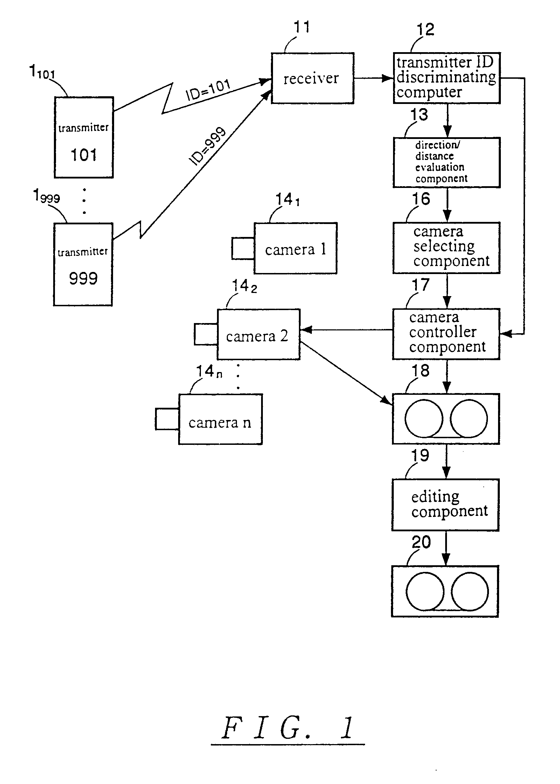

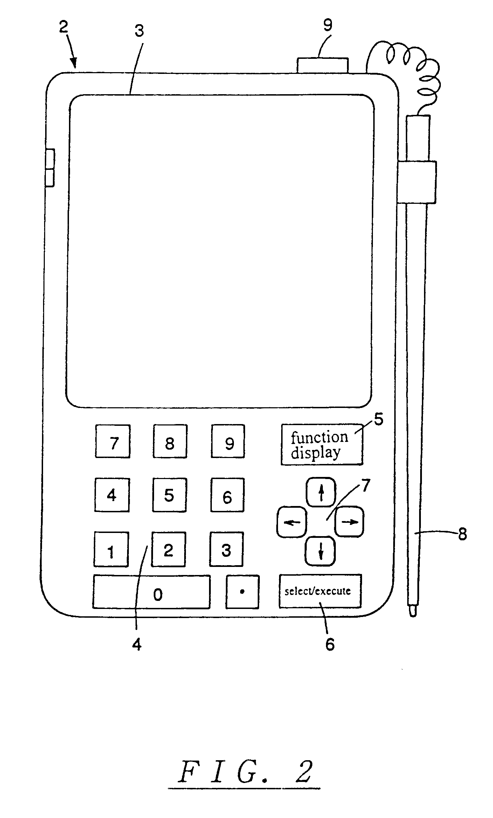

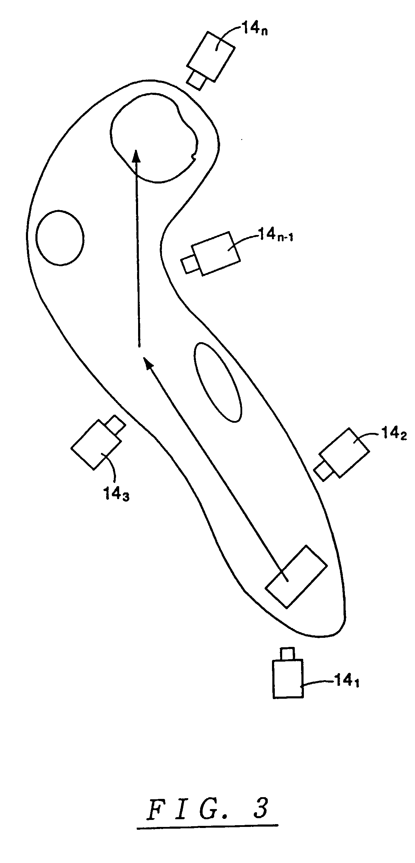

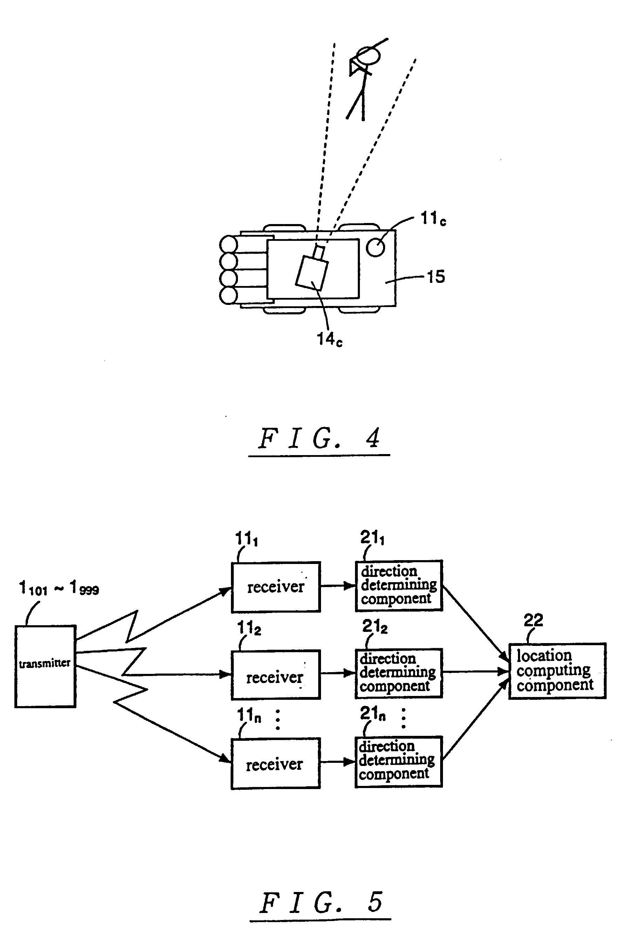

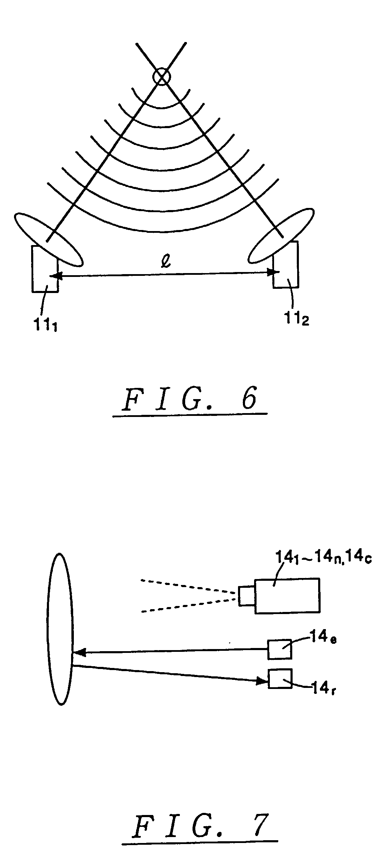

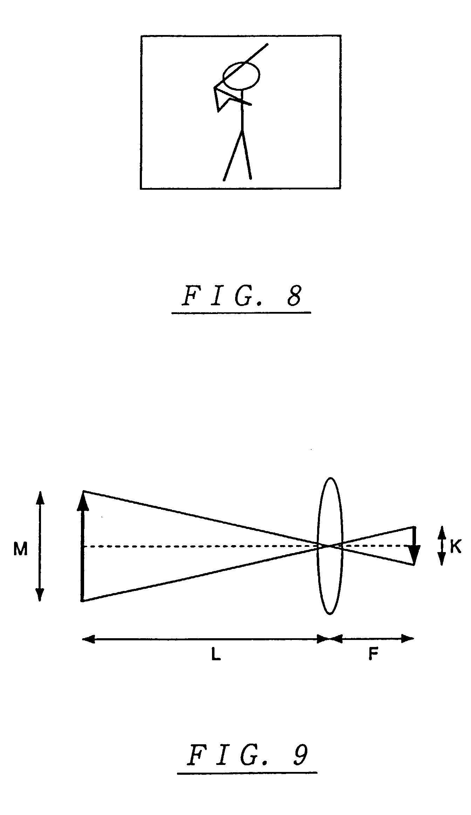

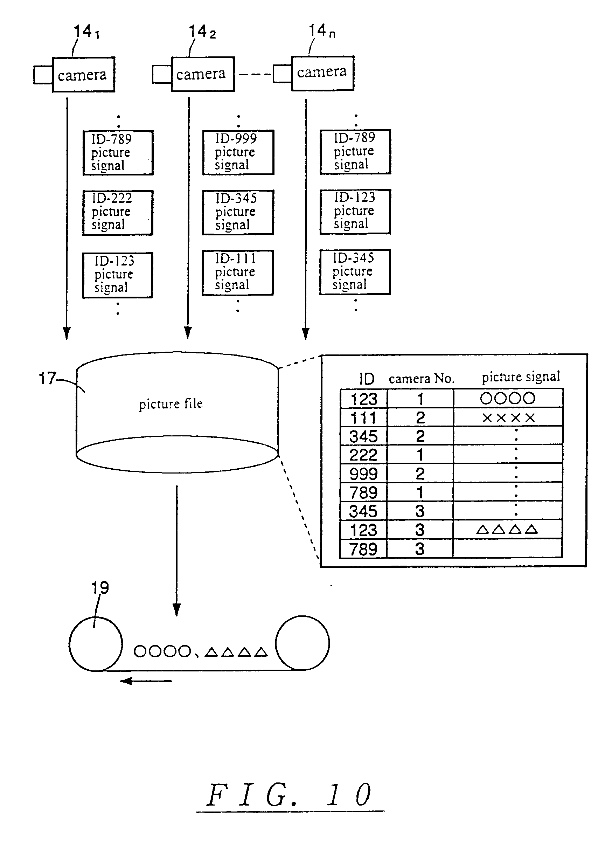

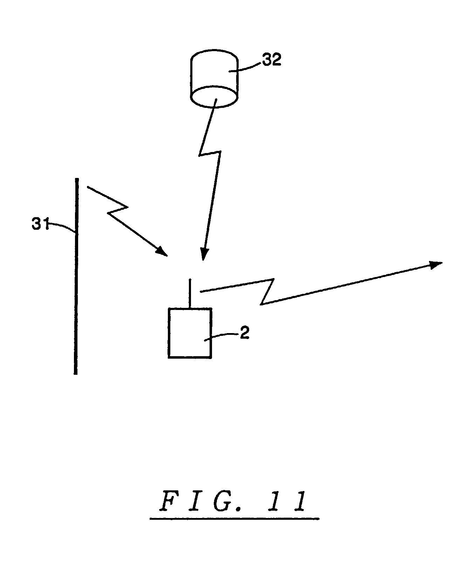

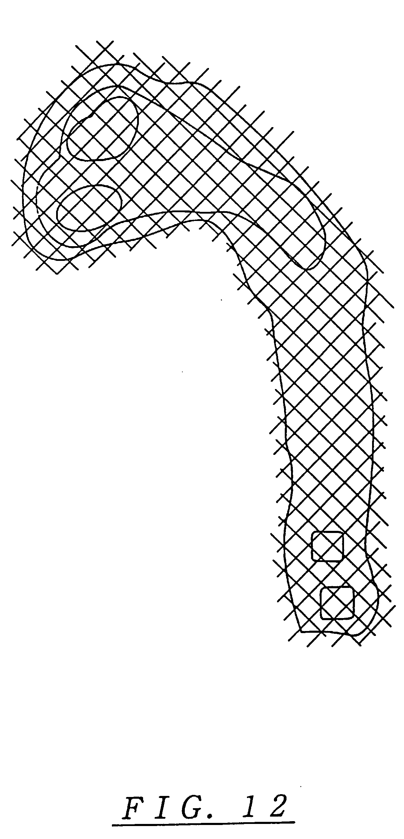

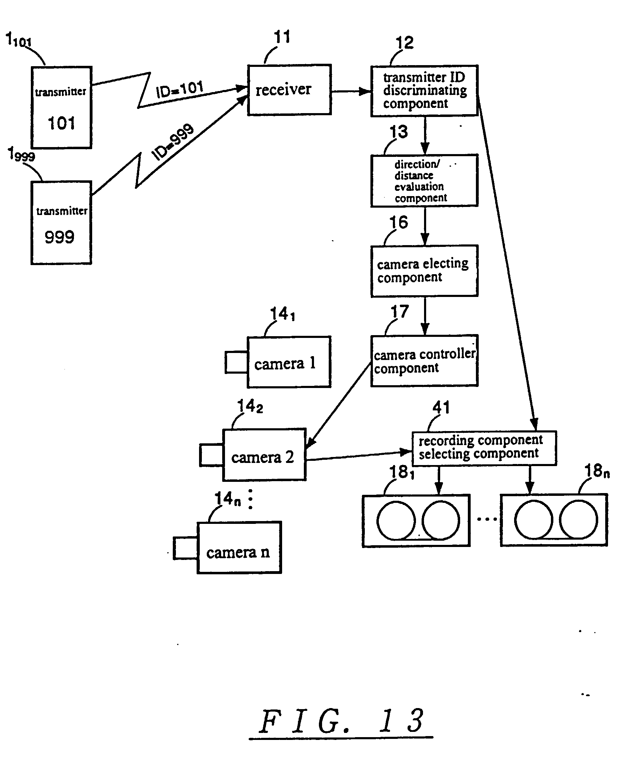

Fig. 1 is a block diagram illustrating a picture-taking apparatus according to an embodiment of the present invention; Fig. 2 is a front view of a mobile unit of same; Fig. 3 is an explanatory drawing of disposition of cameras of same; Fig. 4 is an explanatory drawing to show how the camera placed on a cart is used; Fig. 5 is a block diagram illustrating extraction of a location by means of a plurality of receivers of same; Fig. 6 is an explanatory drawing to illustrate the manner of range finding at the time of location extraction of Fig.5; Fig. 7 is an explanatory drawing to illustrate range finding by the aforementioned camera; Fig. 8 is an explanatory drawing of a subject in a picture frame; Fig. 9 is an explanatory drawing to illustrate the relationship between the distance and zooming with said camera; Fig. 10 is an explanatory drawing to illustrate the manner of editing; Fig. 11 is an explanatory drawing to illustrate the manner of location detection by means of GPS; Fig. 12 is an explanatory drawing to illustrate a course divided into cells; and Fig. 13 is a block diagram illustrating a picture-taking apparatus according to another embodiment of the present invention.

BEST MODE FOR CARRYING OUT THE INVENTION

Next an apparatus for taking pictures of a subject according to an embodiment of the present invention is explained hereunder, referring to the drawings, as to a case where the apparatus is utilized on a golf course.

In Fig. 1, numerals $1_{101}$ to $1_{999}$ denote transmitters having the function of the transmitting means referred to in the appended claims. Each transmitter $1_{101}$ to $1_{999}$ has its own ID and is incorporated in a mobile unit 2 shown in Fig. 2, being capable of sending out signals including its own ID data.

Portable equipment 2 shown in Fig. 2 is provided with a liquid crystal display 3 to display guidance and other information, a ten-key pad 4 to input scores and so forth, a function display key 5 for calling out a display of functions, a select/execute key 6 and scroll keys 7, as well as a light pen 8 attached to the mobile unit, and an emergency button 9 located on the topside of the mobile unit. In addition to transmitting signals, mobile unit 2 is also capable of performing such functions as score tabulation, detecting its own location, guidance display, settling accounts and so forth.

As shown in Fig. 1, a signal sent out from any given transmitter $1_i$ from among transmitters $1_{101}$ to $1_{999}$ is received by a receiver 11 serving as a signal receiving means and disposed at an arbitrary location which is not shown in the drawings, for example, at any place on the course.

The signal received by receiver 11 is processed by a transmitter identifying component 12, which serves as an ID discriminating means, and a direction/distance evaluation component 13, transmitter identifying component 12 ascertaining the ID of transmitter $1_i$ that transmitted the signal based on its ID data, and direction/distance evaluation component 13 judging the direction and the distance to transmitter $1_i$.

Fig. 3 shows a medium par-4 hole, which is provided, as shown in the drawing, with a plurality of cameras $14_1$ to $14_n$ installed around the course. If necessary, an on-vehicle camera $14_c$ may be mounted on a cart 15 together with an on-vehicle receiver $11_c$ as the present embodiment shown in Fig. 4. Each camera $14_1 \sim 14_n$ or $14_c$ is respectively provided with mechanisms to perform panning, tilting as well as zooming and may also be provided with auto-focus capability. In Fig. 3, camera $14_1$ is for a left-handed tee shot or taking pictures of a second shot from the rear; camera $14_2$ is for a tee shot; camera $14_3$ is for taking pictures of a right-handed shot or a left-handed shot from the rear; camera $14_{n-1}$ is for a second shot or taking pictures of a left-handed shot from the rear; and camera $14_n$ is for an approach shot or taking pictures of a second shot from the front. Camera $14_c$ in Fig. 4 is for taking pictures at close-range.

When the direction and distance to the aforementioned arbitrary transmitter $1_i$ which transmitted signals have been determined by direction/distance evaluation component 13, the most suitable camera is chosen by a camera selecting component 16 from among cameras $14_1$ to $14_n$ and $14_c$, and camera $14_i$ thus selected is controlled by a camera controller component 17 to perform panning, tilting and zooming. However, on-vehicle camera $14_c$ need not be used as camera $14_i$. The definition of the aforementioned term "the most suitable camera" to be selected by camera selecting component 16 may be determined by the user's discretion; for example, it may be set beforehand as the camera which is closest and facing the subject whose picture is being taken from the front, or it may always be selected from among those located behind the subject; or simply the closest one; or a special criterion may be set for left-handed players. In cases where a hole is specified to hold a near-pin contest or a driving contest, overall measurement which is free from subjectivity is possible by means of operating all cameras $14_1$ to $14_n$ and $14_c$, or a part of all the cameras, i.e. at a near-pin contest hole, those cameras which have a view of an area from the tee ground to the entire green, and, at a driving contest hole, those which have a view of an area from the teen ground to the furthest possible lie after the first shot. Especially in such contests, these cameras can serve as a tool for an objective evidence of a hole-in-one at a hole for a near-pin contest and an albatross at a hole for a driving contest.

After transmitters $1_{101}$ to $1_{999}$ are operated, cameras $14_1$ to $14_n$ and $14_c$ shoot for about one minute, which is normally a sufficient time length to complete a swing. Images taken by cameras $14_1$ to $14_n$ and $14_c$ are recorded on a picture recording component 18 which serves as a recording means, such as video tape, RAM, hard disk or the like. ID data is also recorded on picture recording component 18 together with pictures shot be cameras $14_1$ to $14_n$ and $14_c$.

Data recorded on picture recording component 18 is edited for each ID by editing component 19, and pictures for each ID are edited in the order of elapsed time and recorded by a dubbing device 20 which records data on such a medium as a standard video tape.

Next, operation of the above embodiment is described hereunder.

First of all, when his turn to play comes, just prior to getting set, a player operates select/execute key 6 of mobile unit 2 which has a transmitter $1_i$ so that transmitter $1_i$ transmits signals including ID data corresponding thereto. The transmitted signals are received by receiver 11 and the ID data thereof is ascertained by transmitter identifying component 12.

Then, the direction of transmitter $1_i$ and the distance thereto are determined by direction/distance evaluation component 13.

When the location of transmitter $1_i$ has been determined as above, camera selecting component 16 makes selection from among cameras $14_1$ to $14_n$ and $14_c$ according to specific criteria determined beforehand to select the most suitable camera, and camera controller component 17 controls panning and tilting of the selected camera, thereby adjusting its angle of view.

Selected camera $14_1 \sim 14_n$ and $14_c$ determines the distance to the subject based on the distance measured by direction/distance evaluation component 13 or by automatic focusing using components incorporated in the camera itself, such as light emitting elements and photo-electric elements or, as shown in Fig.7, an ultrasonic transmitter 14e and ultrasonic receiver 14r, said automatic focusing being performed by emitting light or signals from the light emitting elements or ultrasonic transmitter 14e and computing the distance to the subject based on the length of time from when the light or the signals are emitted to when they are received by the photo-electric elements or ultrasonic receiver 14r.

At this time, camera $14_1 \sim 14_n$ or $14_c$ is zoomed so that the proportion of the image of the subject in relation to the size of the frame is constant as shown in Fig. 8. In other words, when the distance from camera $14_1 \sim 14_n$ or $14_c$ to the subject is L, the height of the subject M, the focal length of the lens of the camera F, and the length of the image of the subject in the frame K as shown in Fig. 9, K is approximately equal to $F \times M/L$, if value L is sufficiently large. Therefore, granting that M is the average height of an adult and constant, K can be made constant by changing focal length F according to distance L to transmitter $1_i$ which has been measured.

Under the above condition camera $14_1 \sim 14_n$ or $14_c$ is operated to shoot for a specified period of time: for example a length of time presumed sufficient for a player to complete a swing, which may be one minute after receiving the signals from transmitter $1_i$.

As shown in Fig. 10, the ID of transmitter $1_i$, which was ascertained by transmitter identifying component 12, is recorded in the order of elapsed time on picture recording component 18 together with pictures taken by camera $14_1 \sim 14_n$ or $14_c$. At this time, images may be compressed to be recorded on picture recording component 18.

Then, the recording is edited by editing component 18 by using IDs recorded on picture recording component 18 so that images belonging to the same ID are extracted. The extracted data is dubbed on a standard video tape or the like in the order of elapsed time by dubbing device 20. When dubbing is performed, such data as the hole numbers and the locations of shooting, which can be determined based on the locations of the subject, the ID number of the camera and so forth, may be added.

Figure 11 shows an example of one system for detecting a location by means of mobile unit 2 itself and transmitting signals including the data for the location thus detected is explained hereunder.

In this case, the direction and distance to mobile unit 2 from camera $14_1 \sim 14_n$ or $14_c$ may be determined by means of, for example, providing holes with a plurality of antennae 31 which transmit reference radio waves or providing mobile unit 2 with a navigation function such as GPS (Global Positioning System) which uses reference radio waves from a plurality of satellites 32 and displays the location of mobile unit 2 in terms of latitude and longitude so that the direction and distance to mobile unit 2 from camera $14_1 \sim 14_n$ or $14_c$ can be computed from the absolute locations of mobile unit 2 and the camera.

As shown in Fig. 12, the terrain of a hole or the entire course may be divided into cells in a matrix, each cell having its own ID number, so that the location of mobile unit 2 may be represented by a cell number. In cases where this cell system is applied, data for the respective directions and distances to the cells with respect to each camera $14_1 \sim 14_n$ or $14_c$ may be stored beforehand so that cameras $14_1 \sim 14_n$ and $14_c$ can be selected and controlled by directly using said data. Furthermore, various specific conditions which influence the selection of the camera used for each cell may be included in the cell data to be stored. Cells are formed by dividing the entire course or the terrain from the tee ground to the green of each hole into small areas in a matrix which measures, for example, 3 m on a side.

As shown in Fig. 13, a plurality of picture

recording components $18_1$ to $18_n$ may be connected to each other, and a picture recording component selecting component 41 may be provided so that picture recording component selecting component 41 sorts and respectively records signals transmitted from cameras $14_1 \sim 14_n$ and $14_c$ on different picture recording components $18_1$ to $18_n$, which may be video tape, RAM or the like, according to IDs included in the signals. In this manner, with images corresponding to different IDs being separately recorded on respective picture recording components $18_1$ to $18_n$ from the beginning, a number of picture recording components is increased, but, on the other hand, pictures can be sorted by IDs without having to undergo the editing process.

INDUSTRIAL APPLICABILITY

As described above, a method and an apparatus for taking pictures of a specific subject according to the present invention is suitable to be used for taking pictures of a player throughout a golf course or other locations.

**Claims**

1.  A method of taking pictures of a subject comprising the steps of:

    detecting at the subject, the location of the subject;
    transmitting from the subject (1), a signal which includes the location data, and subject identification data (ID);
    receiving and extracting said signal from the subject and orienting a picture-taking device (14) in the direction of said location data,
    determining the distance between said picture-taking device (14) and the subject (1) from said location data in order to determine the degree of zooming and focussing so as to adjust the angle of view and bring the subject into focus,
    taking pictures of the subject (1) with said picture-taking device (14) and recording the obtained pictures, said picture-taking procedure continuing for a specified length of time after receiving said signals.

2.  A method of taking pictures as claimed in claim 1, further comprising the steps of recording pictures separately in accordance with their IDs.

3.  A method of taking pictures as claimed in claim 1, in which images are continuously recorded in the order in which they are produced, together with their respective IDs.

4.  A method of taking pictures as claimed in any preceding claim, in which a plurality of picture-taking devices (14, $14_2$) are provided, and the most suitable device is selected from among said picture-taking devices based on signals from the subject.

5.  A method of taking pictures according to any preceding claim, in which a specified area including the said subject locations is divided into a matrix of numbered cells, and the said location data comprises the appropriate cell number, whereby the location and distance of each location can be stored in advance.

6.  Apparatus for taking pictures of subjects in different locations, comprising:

    location detecting means for each subject;
    means ($1_{101}$ - $1_{999}$) for transmitting signals from the subject, including location data and subject identification data (ID);
    signal receiving means (11);
    means (12) for extracting identification data from the received signal;
    means (13) for extracting the location data from the received signal,
    controller means (17) for zooming and focussing a picture-taking device (14) to bring the subject into focus at a required image size in accordance with the location data;
    and means (18-20) for recording pictures taken by said picture-taking device.

7.  A picture-taking apparatus as claimed in claim 6, further comprising a plurality of picture recording means, and means for selecting picture recording means according to each ID.

8.  A picture-taking apparatus as claimed in claim 6 or claim 7, in which said picture recording means is arranged to add the ID to each picture image when it is recorded, and further comprising editing means arranged to edit each image in accordance with the ID.

9.  A picture-taking apparatus as claimed in accordance with any one of claims 6 to 8, comprising a plurality of picture-taking devices, and means for selecting at least one of said picture-taking devices.

10. A picture-taking apparatus as claimed in accordance with any one of claims 6 to 9 and comprising a plurality of signal receiving means, and means for extracting location data from the received signals, and for computing the distance of the subject, from the location data.

**Patentansprüche**

1.  Verfahren zum Aufnehmen von Bildern eines Subjekts, das folgende Schritte umfaßt:

> Erkennen des Subjekts und seines Standorts;
> Übertragen eines Signals vom Subjekt (1), das Standortdaten sowie die Subjektkennung (ID) enthält;
> Empfangen und Extrahieren der besagten Signale durch ein Bildaufnahmegerät (14), und Ausrichten des besagten Geräts in Richtung der besagten Standortdaten;
> Bestimmen der Entfernung zwischen dem besagten Bildaufnahmegerät (14) und dem Subjekt (1) durch Auswertung der besagten Standortdaten, um den Grad des Zoomens und Fokussierens feststellen zu können, so daß der Sichtwinkel eingestellt und das Subjekt in den Fokus gebracht werden kann;
> Anfertigen der Bilder vom Subjekt (1) durch das besagte Bildaufnahmegerät (14) und Speichern der so erhaltenen Bilder, wobei das besagte Bildaufnahmeverfahren über eine bestimmte Zeitdauer nach Empfangen der besagten Signale fortgesetzt wird.

2. Verfahren zum Aufnehmen von Bildern nach Anspruch 1, das darüber hinaus die Schritte des separaten Abspeicherns der Bilder entsprechend ihrer IDs umfaßt.

3. Verfahren zum Aufnehmen von Bildern nach Anspruch 1, bei dem die Bilder zusammen mit ihren entsprechenden IDs fortlaufend in der Reihenfolge ihrer Aufnahme abgespeichert werden.

4. Verfahrend mm Aufnehmen von Bildern nach einem der vorstehenden Ansprüche, bei dem mit einer Vielzahl von Bildaufnahmeeinheiten $(14, 14_2)$ gearbeitet wird, wobei die Bilder von jener Einheit aufgenommen werden, die in Auswertung der Signale als die am besten geeignete Einheit erkannt wurde.

5. Verfahren zum Aufnehmen von Bildern nach einem der vorstehenden Ansprüche, bei dem ein bestimmter Bereich, einschließlich der besagten Subjektstandorte, in eine Matrix numerierter Zellen aufgeteilt wird und die besagten Standortdaten die jeweilige Zellennummer enthalten, wobei der Standort und die Entfernung eines jeden Standorts im voraus abgespeichert werden können.

6. Vorrichtung zum Aufnehmen von Bildern von Subjekten an verschiedenen Standorten, die folgende Elemente umfaßt:

> ein Standorterkennungselement für jedes Subjekt,
> Elemente $(1_{101}$ bis $1_{999})$, die Signale vom Sub-

jekt übertragen, einschließlich der Standortdaten und der Informationen zur Subjektkennung (ID),

> Signalempfangseinheiten (11);
> Elemente (12) zum Extrahieren von Kenndaten aus dem empfangenen Signal;
> Elemente (13) mm Extrahieren der Standortdaten aus dem empfangenen Signal;
> Steuereinheiten (17) mm Zoomen und Fokussieren eines Bildaufnahmegeräts (14), um das Subjekt mit der erforderlichen Bildgröße entsprechend den Standortdaten in den Fokus zu bringen;
> und Elemente (18-20) zum Speichern der Bilder, die von dem besagten Bildaufnahmegerät angefertigt wurden.

7. Vorrichtung zum Aufnehmen von Bildern nach Anspruch 6, die darüber hinaus über eine Vielzahl von Bildspeicherkomponenten sowie Auswahlkomponenten zur Auswahl der Bildspeicherkomponenten entsprechend den jeweiligen ID-Informationen verfügt.

8. Vorrichtung zum Aufnehmen von Bildern nach Anspruch 6 oder 7, in der die besagte Bildspeicherkomponente so konstruiert ist, daß sie während des Speicherns der Bilder an jedes Bild ID-Informationen anhängt, und die darüber hinaus über eine Bearbeitungseinheit verfügt, welche die Bilder mit den angehängten ID-Informationen entsprechend dem Inhalt dieser Informationen bearbeitet.

9. Vorrichtung zum Aufnehmen von Bildern nach einem der Ansprüche 6 bis 8, die mit einer Vielzahl von Bildaufnahmegeräten sowie einer Auswahlkomponente für diese Bildaufnahmegeräte ausgestattet ist, so daß es möglich ist, unter den besagten Bildaufnahmegeräten mindestens eines auszuwählen.

10. Vorrichtung zum Aufnehmen von Bildern nach einem der Ansprüche 6 bis 9, die eine Vielzahl von Signalempfangseinheiten, ein Standortextrahierungselement zum Extrahieren der Standortdaten des Subjekts, von dem die von der besagten Signalempfangseinheit empfangenen Signale emittiert wurden, sowie eine Berechnungseinheit zum Berechnen der Entfernung zwischen dem Subjekt und der Bildspeicherkomponente aufgrund der extrahierten Standortinformationen umfaßt.

**Revendications**

1. Procédé de prise de vues d'un sujet, comprenant les étapes qui consistent à :

> détecter, au niveau du sujet, la position du sujet

;

émettre, à partir du sujet (1), un signal comprenant les données de position et des données d'identification du sujet (ID) ;

recevoir et extraire ledit signal provenant du sujet et orienter un dispositif de prise de vues (14) dans la direction desdites données de position ;

déterminer la distance entre ledit dispositif de prise de vues (14) et le sujet (1) à partir desdites données de position afin de déterminer le degré de travelling et la mise au point, pour régler l'angle de vue et faire le point sur le sujet, prendre des plans du sujet (1) à l'aide dudit dispositif de prise de vues (14) et enregistrer les images obtenues, ladite procédure de prise de vues continuant pendant un laps de temps spécifié après la réception desdits signaux.

2.  Procédé de prise de vues selon la revendication 1, comprenant en outre les étapes consistant à enregistrer des images séparément en fonction de leurs identifications ID.

3.  Procédé de prise de vues selon la revendication 1, dans lequel les images sont enregistrées en continu dans l'ordre dans lequel elles sont produites, en même temps que leurs identifications ID respectives.

4.  Procédé de prise de vues selon l'une quelconque des revendications précédentes, dans lequel une pluralité de dispositifs de prise de vues $(14, 14_2)$ sont prévus, et le dispositif le plus approprié est choisi parmi lesdits dispositifs de prise de vues en fonction des signaux provenant du sujet.

5.  Procédé de prise de vues selon l'une quelconque des revendications précédentes, dans lequel une zone spécifiée comprenant lesdites positions du sujet est divisée en une matrice de cellules numérotées, et lesdites données de position comprennent le numéro de la cellule appropriée, ce en conséquence de quoi l'emplacement et la distance de chaque position peuvent être mémorisés à l'avance.

6.  Appareil de prise de vues de sujets se trouvant en différents endroits, comprenant :

un moyen de détection de position pour chaque sujet,
des moyens $(1_{101} - 1_{999})$ servant à émettre, à partir du sujet, des signaux comprenant des données de position et des données d'identification du sujet (ID) ;
un moyen de réception de signaux (11) ;
un moyen (12) servant à extraire des données d'identification du signal reçu ;
un moyen (13) servant à extraire les données de positionnement du signal reçu ;
un moyen de commande (17) servant à amener un dispositif de prise de vues (14) à effectuer un travelling et à faire le point, de façon à faire le point sur le sujet à une taille d'image requise, en fonction des données de position ;
et des moyens (18-20) servant à enregistrer des images prises par ledit dispositif de prise de vues.

7.  Appareil de prise de vues selon la revendication 6, comprenant en outre une pluralité de moyens d'enregistrement d'images, et des moyens servant à choisir le moyen d'enregistrement d'images en fonction des données ID.

8.  Appareil de prise de vues selon la revendication 6 ou 7, dans lequel ledit moyen d'enregistrement d'images est prévu pour ajouter l'identification ID à chaque image lorsqu'elle est enregistrée, et comprenant en outre des moyens de montage prévus pour monter chaque image selon l'identification ID.

9.  Appareil de prise de vues selon l'une quelconque des revendications 6 à 8, comprenant une pluralité de dispositifs de prise de vues, et des moyens servant à choisir au moins l'un desdits dispositifs de prise de vues.

10. Appareil de prise de vues selon l'une quelconque des revendications 6 à 9, comprenant une pluralité de moyens récepteurs de signaux, et des moyens servant à extraire les données de position depuis les signaux reçus et à calculer la distance du sujet à partir des données de position.

*F I G. 1*

$$FIG. \ 2$$

$FIG. 3$

*F I G. 4*

*F I G. 5*

_F I G.  6_

_F I G.  7_

*F I G. 8*

*F I G. 9*

$F I G. \quad 1 0$

32

31

2

*F I G.  1 1*

*F I G.  1 2*

$1_{101}$

transmitter
**101**

$1_{999}$

transmitter
**999**

ID=101

ID=999

**11**
receiver

**12**
transmitter ID
discriminating
component

**13**
direction/
distance
evaluation
component

**16**
camera electing
component

**17**
camera controller
component

$14_1$
camera 1

$14_2$
camera 2

$14_n$
camera n

**41**
recording component
selecting component

$18_1$

$18_n$

...

*F I G.   1 3*